# EUROPÄISCHE PATENTSCHRIFT

(11) **EP 2 885 107 B1**
(45) Veröffentlichungstag und Bekanntmachung des Hinweises auf die Patenterteilung: **29.03.2017**
(21) Anmeldenummer: 13762048.0
(22) Anmeldetag: 16.08.2013
(51) Int. Cl.: B23P 11/00, F01L 1/047, F16H 53/02, F01L 1/053, F01L 1/02

(54) **VERFAHREN ZUR HERSTELLUNG EINES NOCKENWELLENMODULS**
METHOD FOR PRODUCING A CAMSHAFT MODULE
PROCÉDÉ DE FABRICATION D'UN MODULE D'ARBRE À CAMES

(30) Priorität: 16.08.2012 DE 102012016357
(43) Veröffentlichungstag der Anmeldung: 24.06.2015
(73) Patentinhaber: Amtek Tekfor Holding GmbH, 77652 Offenburg (DE)
(72) Erfinder: SCHULER, Markus, 77709 Oberwolfach (DE); ECHLE, Joachim, 77709 Oberwolfach (DE)
(86) Internationale Anmeldenummer: PCT/DE2013/000461
(87) Internationale Veröffentlichungsnummer: WO 2014/026669

(56) Entgegenhaltungen:
- EP-A1- 0 892 156
- WO-A1-2007/012407
- DE-A1-102009 018 413
- DE-A1-102009 051 636
- DE-A1-102010 021 904
- DE-A1-102010 048 225
- DE-B4-102008 007 091
- DE-C2- 19 710 847
- JP-A- H0 989 077
- JP-A- H08 110 275
- JP-A- 2000 329 214

## Beschreibung

Die Erfindung betrifft ein Verfahren zur Herstellung eines Nockenwellenmoduls. Dabei verfügt das Nockenwellenmodul über mindestens eine Nockenwelle und einen Lagerrahmen mit Lagervorrichtungen. Die Nockenwelle weist mindestens eine Welle und Nocken mit Aussparungen auf. Aussparungen weisen ebenfalls die Lagervorrichtungen auf. Weiterhin bezieht sich die Erfindung auf ein Verfahren zur Herstellung eines Nockenwellenmoduls, das über mindestens eine Nockenwelle verfügt. Dabei weist die Nockenwelle mindestens eine Welle und Nocken auf.

Nockenwellen verfügen im Allgemeinen über ein Trägerelement (auch als Rohr oder Welle bezeichnet) und Nocken. Es können auch weitere Funktionselemente wie Lagerringe, Winkelgeber oder Zahnräder vorgesehen sein. Bei der Anwendung in Motoren dienen die Nockenwellen als Teil des Ventiltriebs, wobei sich das Trägerelement um seine Längsachse dreht. Durch die Nocken wird die Drehbewegung in Längsbewegungen umgewandelt, um die Ein- und Auslassventile des Motors zu steuern.
Im Stand der Technik sind bereits unterschiedliche Varianten von Nockenwellen, deren Bestandteilen oder des Herstellungsverfahrens bekannt. Bei den sogenannten gebauten Nockenwellen werden die Nocken und sonstigen Funktionselemente separat gefertigt und auf die Welle aufgebracht.
Die Nockenwellen werden zumeist nach der Fertigung auf dem Zylinderkopf des jeweiligen Verbrennungsmotors über Lagerstellen aufgebracht und dort befestigt. Dabei müssen die Nockenwellen zum Zylinderkopf und zueinander ausgerichtet sein. Für die Lagerung sind daher beispielsweise geteilte Lager erforderlich, um die Wellen in diese hineinlegen zu können. Alternativ werden bei der Fertigung der Nockenwelle die Lager oder Lagerbestandteile bereits auf der jeweiligen Nockenwelle zusätzlich zu den Nocken und sonstigen Funktionselementen aufgebracht.

Um die Fertigung von Motoren zu vereinfachen, werden teilweise Nockenwellenmodule verwendet, die insbesondere zwei Nockenwellen in entsprechenden Lagern aufnehmen und die bei der eigentlichen Montage der Motoren als eine Einheit auf dem Zylinderkopf aufgebracht werden.
In einem weiteren Entwicklungsschritt werden im Stand der Technik teilweise die Methoden zur Fertigung der Nockenwelle mit der Fertigung des Nockenwellenmoduls kombiniert. Daher werden nicht mehr die Nockenwellen einzeln gefertigt und dann in das jeweilige Modul eingebracht, sondern die Nockenwellen werden innerhalb des Moduls gefertigt. Aufgrund der Rahmenbedingungen (z. B. Form des Moduls in Folge der Ausgestaltung als Zylinderkopfhaube, beengte Räumlichkeiten, verwendete Materialien) müssen dabei entsprechende Änderungen und Anpassungen an der Nockenwelle bzw. dem Modul vorgenommen werden.
Die Offenlegungsschrift DE 10 2010 048 225 A1 beschreibt ein Verfahren zur Fertigung von Nockenwellen, wobei eine Welle durch die Aussparungen der einzelnen Funktionselemente (z. B. Nocken) geschoben wird und wobei sich durch die Ausgestaltung der Welle und der Funktionselemente jeweils ein Presssitz ergibt. Während des Einbringens der Welle werden die Funktionselemente von Halteelementen gehalten, die selbst innerhalb eines Rahmens angeordnet sind. In den Halteelementen befinden sich Sensoren, die die Kraft messen, die von der Welle auf die Funktionselemente beim Fertigen ausgeübt werden. Von diesen gemessenen Werten ausgehend lässt sich bestimmen, welches Drehmoment über die Verbindung zwischen Funktionselement und Welle übertragen werden kann. Mit anderen Worten: über die Kraft, mit der die Welle auf die Nocken einwirkt, kann z. B. ausgehend von Referenzmessungen berechnet werden, wie fest die Verbindungen sind, insofern sie Drehmomente bis zu einem gewissen Grenzwert übertragen können, ohne dass sich die Verbindung löst.

In der Offenlegungsschrift DE 10 2010 021 904 A1 wird die Fertigung einer gebauten Nockenwelle beschrieben, wobei die Welle unterschiedliche Außendurchmesser aufweist. Bei der Fertigung wird die Welle durch die hintereinander angeordneten Funktionselemente geschoben. Durch eine Überdeckung zwischen Abschnitten der Wellen und den durchgehenden Aussparungen der Funktionselemente wird eine Glättung von Abschnitten der Welle erzeugt.
Die Patentschrift DE 197 10 847 C2 offenbart eine gebaute Nockenwelle, bei deren Herstellung die separat gefertigten Nocken auf Aufnahmeabsätzen einer Welle aufgebracht werden. Die Außendurchmesser der Aufnahmeabsätze werden dabei in einer Richtung des Welle kleiner. Für die Befestigung der Nocken verfügen deren Innenaussparungen oder die Aufnahmeabsätze über axial verlaufende Zähne, die jeweils spanabhebend beim Aufbringen der Nocken auf die Welle eine Verbindung zwischen Nocke und Welle erzeugen. Gestufte Welle zeigen ebenfalls die JP 2000 329214 A oder die DE 10 2009 018 413 A1.
Die Patentschrift DE 10 2008 007 091 B4 beschreibt ein Nockenwellenmodul, in dem zwei gefertigte Nockenwellen mit Lagerböcken fest mit einer Zylinderkopfhaube verbunden sind.
Die Offenlegungsschrift DE 10 2009 051 636 A1 beschreibt eine Fertigung eines Nockenwellenmoduls, bei dem die Nockenwellen innerhalb des Moduls gefertigt werden. Hierfür werden in einem Schritt die einzelnen Funktionselemente mit jeweils einem zugehörigen Toleranzring auf der Welle aufgefädelt. Daran anschließend wird durch eine axiale Relativverschiebung zwischen Toleranzring und Funktionselement ein Pressverband zwischen Funktionselement, Toleranzring und Welle erzeugt.
Wesentlich bei der Fertigung ist, dass die Orientierung der Nockenwellen zueinander und auch innerhalb der einzelnen Nockenwelle die Orientierung der Nocken durch den Herstellungsprozess, nicht verändert wird. Die Orientierung der Nocken zueinander ist beim eingebauten Modul wesentlich für die Steuerung der Ventile.
Eine besondere Problemstelle ergibt sich häufig durch die Zahnräder, über die die Nockenwellen gedreht werden, und die Axiallager, die den Auflagebereich des Nockenwellenmoduls auf dem Motorblock definieren. Dabei ergibt sich die Problematik daraus, dass die Wellen sich in Folge der Kraft beim Durchschieben durch die Nocken, durch andere Funktionselemente, Lager etc. leicht verformen, so dass es zu Schwankungen der axialen Abstände der Bauteile zueinander kommen kann. Die Zahnräder sind meist angrenzend an einer Lagerbrücke angeordnet.

Dabei darf der Abstand zwischen einem Axiallager und dem Zahnrad nicht zu klein sein, da sonst das freie Drehen des Zahnrad und dadurch der Nockenwelle beeinträchtigt werden könnte.

Ein Verfahren zur Herstellung einer Nockenwelle beschreibt beispielsweise die WO 2007/012407 A1. Dabei wird zunächst ein Nockenwellenrad auf der Welle aufgebracht. Weitere Fertigungsschritte erfolgen dann relativ zu Antastpunkten, die dem Nockenwellenrad zugeordnet sind und als Referenzpunkte dienen. Ähnlich werden bei der Fertigung beispielsweise gemäß der EP 0 892 156 A1 oder der JP 09 089077 A die axialen Abstände der Nocken berücksichtigt.

Um die während der Fertigung wirkenden Kräfte zu messen, werden gemäß der JP 08 110275 A Wegaufnehmer verwendet.

Der Erfindung liegt daher die Aufgabe zugrunde, ein Herstellungsverfahren für ein Nockenwellenmodul vorzuschlagen, das eine hohe Fertigungsgenauigkeit und kleine Maßabweichungen erlaubt, wobei insbesondere das Auftreten von störenden Kräften während und nach der Fertigung im Nockenwellenmodul vermieden wird. Das erfindungsgemäße Verfahren, bei dem die zuvor hergeleitete und aufgezeigte Aufgabe gelöst ist, ist zunächst und im Wesentlichen dadurch gekennzeichnet, dass die Welle derartig erzeugt und/oder bearbeitet wird, dass die Welle mindestens zwei unterschiedliche Außendurchmesser aufweist, dass mindestens ein Teil der Nocken und/oder der Lagervorrichtungen derartig erzeugt und/oder bearbeitet wird, dass die Aussparungen der Nocken und/oder die Aussparungen der Lagervorrichtungen unterschiedliche Durchmesser aufweisen, dass der Lagerrahmen derartig gehalten wird, dass der Lagerrahmen während der Herstellung des Nockenwellenmoduls entlang mindestens einer Bewegungsachse beweglich und entlang einer Einfuhrrichtung der Welle im Wesentlichen starr ist, dass die Nocken relativ zum Lagerrahmen derartig angeordnet werden, dass die Nocken - insbesondere durch ihre Erhebungen - zueinander ausgerichtet sind und dass die Durchmesser der Aussparungen der Nocken und die Durchmesser der Aussparungen der Lagervorrichtungen in Einfuhrrichtung kleiner werden, und dass die Welle in Einfuhrrichtung in den Lagerrahmen derartig mindestens durch die Aussparungen der Nocken und die Aussparungen der Lagervorrichtungen eingeführt wird, dass entgegen der Einfuhrrichtung der Außendurchmesser der Welle zunimmt und dass sich zumindest zwischen der Welle und zumindest einem Teil der Nocken jeweils ein Pressverband ergibt. In einer Ausgestaltung werden alle Nocken durch einen Pressverband auf der Welle befestigt. In einer Ausgestaltung wird auch zwischen der Welle und zumindest einem Teil der Lagervorrichtungen ein Pressverband erzeugt.
Der Lagerrahmen, der insbesondere die Montage auf dem Motorblock erlaubt, wird erfindungsgemäß teilweise schwimmend gelagert, d. h. er kann durch die auf ihn wirkenden Kräfte bis zu einem gewissen Maß, das durch die für die Halterung verwendeten Elemente bestimmt wird, ausweichen. Hierfür sind vorzugweise in den Vorrichtungen zur Halterung des Lagerrahmens Federelemente vorgesehen, die eine Bewegung erlauben und anschließend rückführend wirken. Dabei sind die Funktionselemente - z. B. Nocken - und anderen Lagervorrichtungen - z. B. Lagerringe oder Lagerbrücken - entweder Teil des Lagerrahmens oder so in ihm für die Fertigung angeordnet, dass sie sich mit ihm mitbewegen. Alternativ sind die Elemente auch separat vom Lagerrahmen gehalten, jedoch so angeordnet, dass sie bereits ihre Endposition innerhalb des Nockenwellenmoduls einnehmen. Über die schwimmende Lagerung kann infolge der Bewegung der Welle eine Selbstzentrierung des Lagerrahmens erreicht werden, so dass insbesondere schädigende Kräfte oder Verspannungen etc. vermieden werden. Die Lagervorrichtungen weisen beispielsweise teilweise Wälzlager bzw. Wälzkörper auf, die vorzugweise bei der Fertigung keine axialen oder radialen Kräfte erfahren sollten. Daher erlaubt die schwimmende Lagerung das Ausweichen der Anordnung. Weiterhin ist die Welle gestuft ausgestaltet, wobei die Bauteile (wie Nocken, Lagerringe, allgemein die Lagervorrichtungen oder allgemein die Funktionselemente), durch deren Aussparungen die Welle bei der Fertigung hindurchgeführt wird, mit passenden Innendurchmessern ihrer Aussparungen versehen sind. Durch die Stufung der Welle und die Anordnung der Bauteile entsprechend der Durchmesser der Aussparungen kann die Welle bis zu einer gewissen Vorposition eingeführt werden, ohne dass auf die die Welle umgebenden Bauteile eine Kraft ausgeübt wird. Eine Kraftwirkung tritt zunächst nicht ein, da die Welle mit dem kleinsten Durchmesser nach vorne eingeführt wird und die Durchmesser der Aussparungen in der Bewegungsrichtung abnehmen, so dass die Welle zunächst durch die größeren Innendurchmesser geführt wird. Zwischen der Welle und den Funktionselementen (z. B. Nocken) oder den Lagervorrichtungen (z. B. Lagerringe, Lagerbrücken) besteht daher weitgehend ein Spiel bei den Bauteilen, die nicht miteinander verbunden werden und ergibt sich ein Pressverband bei den miteinander zu verbindenden Bauteilen. Dabei sind in einer Ausgestaltung mehrere in der Anordnung im Lagerrahmen aufeinander folgende Funktionselemente bzw. Nocken und/oder Lagervorrichtungen mit dem gleichen Innendurchmesser der Aussparungen vorgesehen. Daher müssen sich nicht alle Innendurchmesser der Aussparungen unterscheiden; sie müssen sich für das erfindungsgemäße Verfahren nur so relativ zum Lagerrahmen befinden, dass das Durchführen der Welle durch alle Bauteile möglich ist.
In einer Variante sind die Bauteile, die das Nockenwellenmodul bilden, d. h. beispielsweise insbesondere die Nocken und Lagerringe vor der Montage bereits fertig bearbeitet. Die Lagerringe oder Lagerbrücken sind dabei insbesondere auch vollständig geschlossene Bauteile, durch deren durchgehende Aussparungen die Welle geschoben und anschließend vorzugsweise über einen Pressverband befestigt wird.
In einer Ausgestaltung ist die Welle zumindest teilweise mit einer Rändelung versehen.
In einer Variante werden zwei Nockenwellen nebeneinander in das Modul eingebracht. Zwei Nockenwellen dienen beispielweise der Steuerung der Ein- und Auslassventile.
Eine Ausgestaltung des Verfahrens sieht vor, dass der Lagerrahmen mit mindestens einem Teil der Lagervorrichtungen erzeugt wird. Alternativ oder ergänzend wird mindestens ein Teil der Lagervorrichtungen nach einer separaten Fertigung relativ zum Lagerrahmen angeordnet. Bei den Lagervorrichtungen handelt es sich teilweise um Lagerringe - z. B. Wälzkörperlager - oder um größere Elemente wie Lagerbrücken. Diese sind teilweise feste Bestandteile des Lagerrahmens oder werden für die Fertigung relativ zum Lagerrahmen angeordnet. Das Verfahren wird gemäß einer Ausgestaltung im Wesentlichen bei Raumtemperatur durchgeführt. Alternativ oder ergänzend wird zumindest das Einführen der Welle bei im Wesentlichen gleicher Temperatur von Lagerrahmen und Nockenwelle durchgeführt. Im Stand der Technik werden einzelne Bauteile erwärmt, während andere gekühlt werden. Dieser Aufwand ist beim erfindungsgemäßen Verfahren nicht erforderlich. Zudem wird weiterhin alternativ oder ergänzend das Einführen der Welle frei von einem Fügemittel durchgeführt. In einer Ausgestaltung wird während des Einführens der Welle die auf die Welle aufgebrachte Kraft gemessen. Durch die Überwachung der aufgebrachten Kraft kann auf den erzeugten Pressverband geschlossen werden, worüber sich wieder bestimmen lässt, welches Drehmoment maximal über die Verbindung - beispielsweise zwischen Nocken und Welle - übertragen werden kann.
Gemäß einer Ausgestaltung handelt es sich bei den Lagervorrichtungen und den Nocken um fertig vorbearbeitete und um die jeweiligen Aussparungen herum im Wesentlichen geschlossen ausgestaltete Elemente. Daher ist keine Nachbearbeitung notwendig und das Herstellungsverfahren unterscheidet sich von einem Teil der Technik insbesondere durch das Führen der Welle durch die bereits geschlossenen Aussparungen der Bauteile.
In Ergänzung zu den Ausgestaltungen des zuvor genannten Verfahrens lassen sich auch die im Folgenden genannten Schritte ausführen und umsetzen. Das folgende Verfahren erlaubt jedoch auch eine Herstellung einer Nockenwelle ohne die Schritte des zuvor genannten Verfahrens. Entsprechend ist es für das folgende Verfahren ggf. ausreichend, wenn das Nockenwellenmodul über mindestens eine Nockenwelle verfügt, die mindestens eine Welle und Nocken aufweist. Die anderen oben genannten Bestandteile sind für die Umsetzung des folgenden Verfahrens nicht unbedingt notwendig, stehen aber auch einer Umsetzung des Verfahrens nicht negativ entgegen. Einzelne der oben genannten Ausgestaltungen lassen sich jedoch auch beim folgenden Verfahren umsetzen.

Die zuvor aufgezeigte Aufgabe wird alternativ bzw. ergänzend in einer weiteren Lehre der Erfindung durch das folgende Verfahren gelöst, das darin besteht, dass die Welle teilweise in die Aussparung eines Funktionselements eingeführt wird, dass mindestens ein Abstand zwischen dem Funktionselement und einem Referenzelement ermittelt wird, dass der ermittelte Abstand mit einem vorgebbaren Sollabstand verglichen und ein Vergleichsergebnis erzeugt wird, und dass ausgehend von dem Vergleichsergebnis eine Kraft auf die Welle ausgeübt wird. Die Kraft ist insbesondere derartig, dass durch sie die Welle weiter in die Aussparungen des Funktionselements bzw. dadurch hindurch geschoben wird.
Um den Abstand des Funktionselements und dem Referenzelement gemäß der zweiten Lehre der Erfindung optimal zu erzielen, wird zunächst die Welle nur teilweise in die Aussparung des Funktionselements eingebracht, wobei sich bereits eine gewisse Spannung ergibt. Das bestimmte Funktionselement ist dabei insbesondere das letzte Bauteil, durch dessen Aussparung die Welle geschoben wird. Das Funktionselement befindet sich daher in einer Ausgestaltung gegenüber dem Bereich, an dem die Welle in den Lagerrahmen eingeführt wird. Durch das Einführen der Welle in die Aussparung des Funktionselements wirkt bereits eine gewisse Kraft. Nach dem Einfahren wird die Bewegung der Welle angehalten und es wird ein Abstand zwischen dem Funktionselement und einem Referenzelement vermessen und mit einem Sollwert verglichen. Ausgehend von einem sich einstellenden Vergleichsergebnis, d. h. insbesondere ausgehend von der Differenz zwischen dem gemessenen und dem Sollwert wird dann eine Kraft auf die Welle ausgeübt, durch die sie auf die Endposition gebracht wird, so dass insbesondere der Abstand zwischen dem Funktionselement und dem Referenzelement dem Sollwert entspricht.
Das zuvor genannte Verfahren kann für ein spezielles Funktionselement angewendet werden oder auch für weitere Funktionselemente, Nocken oder Lagervorrichtungen der Nockenwelle bzw. des Nockenwellenmoduls. Daher kann das Verfahren auch separat von dem oben ausgeführten Verfahren Anwendung finden oder eine Ergänzung davon darstellen.
Eine Ausgestaltung sieht vor, dass der Abstand ermittelt wird, während die Welle und/oder das Funktionselement frei von einer auf die Welle bzw. das Funktionselement ausgeübten Kraft sind/ist. Von außen wirkt somit keine Kraft in der Zeit, in der der Abstand vermessen bzw. ermittelt wird; es wirkt nur die bereits aufgebaute Kraft zwischen Welle und Funktionselement.
In einer weiteren Ausgestaltung wird die Welle derartig teilweise in die Aussparung des Funktionselements eingeführt, dass der Abstand zwischen dem Funktionselement und dem Referenzelement größer als der vorgebbare Sollabstand ist. Durch die Bewegung der Welle wird in dieser Ausgestaltung der Abstand zwischen dem Funktionselement und dem Referenzelement verkleinert, daher wird die Bewegung der Welle in dem Moment gestoppt, in dem eine weitere Krafteinwirkung den Abstand weiter verkleinern würde. Wird alternativ durch die Bewegung der Abstand größer, so würde die Bewegung der Welle unterbrochen in dem Moment, in dem zu erwarten ist, dass der Abstand kleiner als der Sollabstand ist.

Gemäß einer Ausgestaltung handelt es sich bei dem Funktionselement um ein Zahnrad und bei dem Referenzelement um ein Axiallager.

Im Einzelnen gibt es eine Vielzahl von Möglichkeiten, die Lehren der Erfindung auszugestalten und weiterzubilden. Dazu wird verwiesen einerseits auf die dem Patentanspruch 1 bzw. dem Patentanspruch 6 nachgeordneten Patentansprüche, andererseits auf die folgende Beschreibung eines Ausführungsbeispiels in Verbindung mit der Zeichnung. In der Zeichnung zeigt
- Fig. 1: eine schematische, im Wesentlichen die funktionalen Wirkzusammenhänge verdeutlichende Darstellung eines Nockenwellenmoduls während der Herstellung im Schnitt,
- Fig. 2: ein vergrößerter Ausschnitt des Nockenwellenmoduls der Fig. 1,
- Fig. 3: eine Draufsicht auf ein schematisches Nockenwellenmodul im während der Herstellung gehaltenen Zustand und
- Fig. 4: eine weitere schematische Darstellung eines Zustands während der Herstellung eines Nockenwellenmoduls im Schnitt.

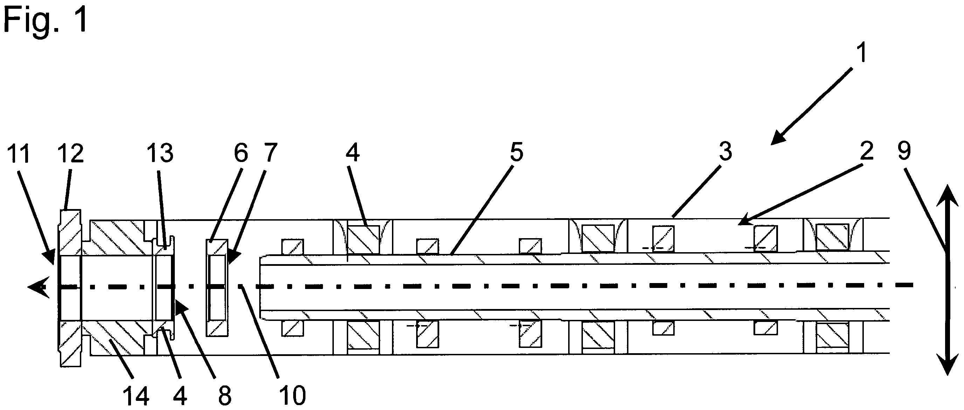

Die Fig. 1 zeigt ein Nockenwellenmodul 1 während der Herstellung. Dabei werden gleichzeitig die Nockenwelle 2 erzeugt und die Nockenwelle 2 wird in den Lagerrahmen 3 eingebracht. Über den Lagerrahmen 3 wird bei der weiteren Verarbeitung das Nockenwellenmodul 1 auf einem Motorblock befestigt. Dafür trägt der Lagerrahmen 3 die Nockenwelle 2 und hält sie drehbar in den Lagervorrichtungen 4. Bei den Lagervorrichtungen 4 handelt es sich teilweise um Lagerbrücken oder auch um Lagerringe oder sonstige der Lagerung dienende Elemente wie z. B. Wälzlager.
Für die Fertigung wird die Welle 5 der Nockenwelle 2 durch alle Bauteile geführt, die sich anschließend im Betrieb mit der Nockenwelle 2 mitdrehen bzw. die der Lagerung oder Halterung oder auch der Kraftübertragung auf oder von der Nockenwelle 2 dienen. So wird die Welle 5 insbesondere durch die Nocken 6 bzw. durch deren Aussparungen 7 geführt. Dabei haben insbesondere die zu verbindenden Bauteile, also die Einzelteile des Nockenwellenmoduls 1 im Wesentlichen die gleiche Temperatur und der Fügeprozess findet vorzugsweise auch ohne ein Füge-, Gleit- oder Schmiermittel statt.
Weiterhin wird die Welle 2 auch durch die Aussparungen 8 der Lagervorrichtungen 4 geführt.
Eine besondere Abstimmung besteht darin, dass die Welle 5 (hier mit drei unterschiedlichen Außendurchmessern) gestuft ist und dass die durchgehenden Aussparungen der Lagervorrichtungen 4 und der Nocken 6 bzw. weiterer Funktionsoder Lagerelemente um die Welle 2 herum passend ausgestaltet sind, d.h. auch diese Aussparungen haben nicht den gleichen Durchmesser. Die Bauteile mit Aussparungen und anschließendem Kontakt mit der Welle 2 werden daher so angeordnet, dass der Durchmesser der Aussparungen entweder im Wesentlichen konstant ist oder in einer Richtung abnimmt.
Der Lagerrahmen 3 wird für den Fügeprozess - d. h. für das Einbringen der Welle 5 und dessen Verbindung insbesondere jeweils über einen Pressverband mit den Elementen der Nockenwelle 2 bzw. des Lagerrahmens 3 - so gehalten, dass er Bewegungen in mehrere Richtungen ausführen kann. So ist beispielsweise eine Bewegung längs der Bewegungsachse 9 möglich, die hier im Wesentlichen senkrecht zu einer Längsachse des Lagerrahmens 3 verläuft. Über diese Beweglichkeit kann der Lagerrahmen 3 der Welle 5 in einem gewissen Maß, das über die Einstellung der den Lagerrahmen 3 haltenden Elemente vorgebbar ist, ausweichen bzw. es ergibt sich eine Selbstzentrierung des Lagerrahmens 3 und der darin befindlichen Bauteile.
Die Welle 5 wird dabei entlang der Einfuhrrichtung 10 eingebracht, wobei die Welle 5 mit dem kleinsten Außendurchmesser voran eingeführt wird.
Die Welle 5 ist in der Darstellung bis zu einer gewissen Vorposition in den Lagerrahmen 3 eingebracht, bis zu dem die Welle 5 noch keine Kraft auf die umgebenden Elemente ausgeübt hat, da zwischen den Elementen und der Welle 5 noch ausreichend Spiel aufgrund der gestuften Welle 5 und den darauf abgestimmten Aussparungen besteht. Wird im nächsten Schritt die Welle 5 weiter in Einfuhrrichtung 10 geschoben, so ergeben sich erste Berührungen, auf die der Lagerrahmen 3 teilweise ausweichen kann. Die Lagerung entlang der Achse der Einfuhrrichtung 10 ist jedoch unbeweglich, d.h. der Lagerrahmen 3 ist in Einfuhrrichtung 10 bzw. entgegen der Einfuhrrichtung 10 starr gehalten. Die schwimmende Lagerung erlaubt eine selbsttätige Reaktion des Lagerrahmens 3 auf Fertigungstoleranzen bzw. auf Abweichungen der Anordnung von einer fluchtenden Anordnung der Aussparungen der Bauteile hintereinander.

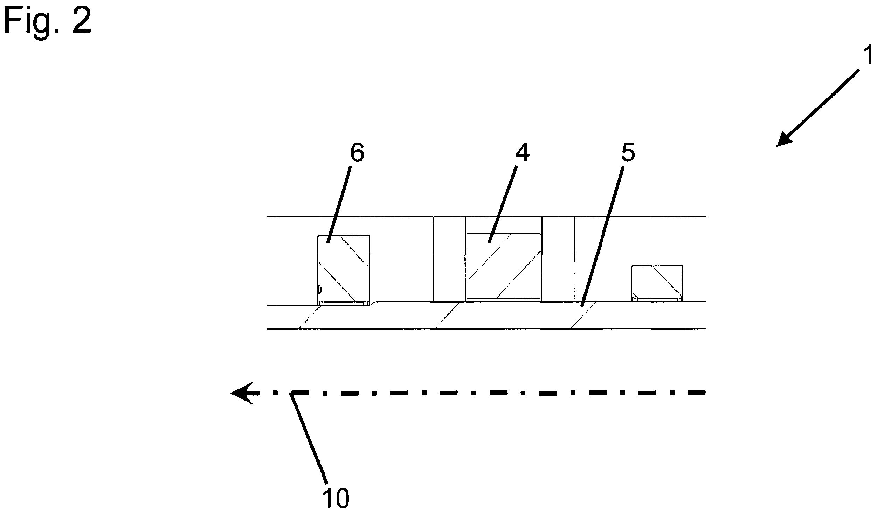

In der Fig. 2 ist der Effekt der Stufung der Welle 5 zu erkennen, durch die zwischen Welle 5 und Nocken 6 im in der Fig. 1 gezeigten Zustand noch ausreichend Spiel besteht. Durch eine weitere Bewegung in Einfuhrrichtung 10 wird das Spiel zwischen Welle 5 und Nocken 6 aufgehoben. Durch die Überdeckung der Bauteile stellt sich dann jeweils ein Pressverband ein. In der Fig. 2 ist ebenfalls eine Lagervorrichtung 4 innerhalb einer Lagerbrücke zu erkennen, die beim fertig verbauten Nockenwellenmodul 1 im Motor die Drehung der Nockenwelle um ihre Längsachse erlaubt.
In der Fig. 1 ist weiterhin am hier zeichnerisch linken Ende des Nockenwellenmoduls 1 ein Zahnrad als besonderes Funktionselement 12 der Nockenwelle 2 zu erkennen. Über dieses Zahnrad 12 wird die Nockenwelle 2 im Motor angetrieben. Dabei ist insbesondere der Abstand zwischen dem Funktionselement 12 und der benachbarten Lagervorrichtung 4 in Form eines Axiallagers 13, das in diesem Beispiel als Referenzelement dient, relevant. Zwischen beiden befindet sich ein Endstück 14 des Lagerrahmens 3, also quasi ein Stück Wand. Wird daher der Abstand zu klein eingestellt, so kann es zu Reibungen an dem Endstück 14 kommen, d.h. ein freies Laufen der Nockenwelle 2 wird gestört. Der Abstand darf jedoch auch nicht zu groß sein, da insbesondere das Zahnrad 12 in Relation zu anderen - hier nicht dargestellten - Elementen des Motors die richtige Position haben muss. Daher wird beim Erzeugen des Pressverbands zwischen der Welle 2 und dem Funktionselement 12 über ein zweiteiliges Einfahren der Welle 2 in die Aussparung 11 des Funktionselements 12 besonders Rücksicht genommen.

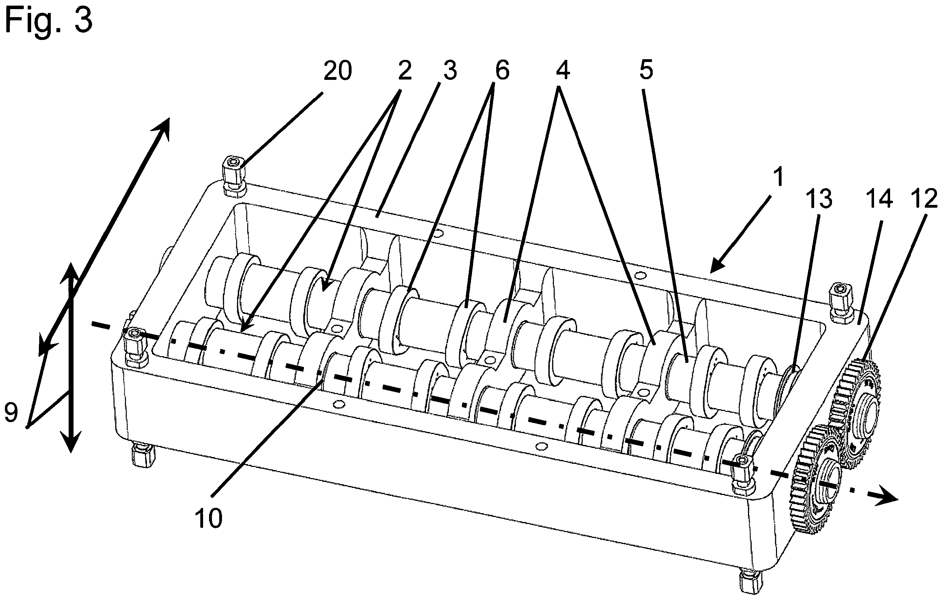

In der Fig. 3 ist ein Nockenwellenmodul 1 mit zwei Nockenwellen 2 zu erkennen, die nebeneinander im Lagerrahmen 3 angeordnet und über mehrere Lagerbrücken als Lagervorrichtungen 4 gelagert sind. Die Wellen 5 sind dabei mit den Nocken 6 über Pressverband verbunden.

Bei der Fertigung sind die beiden Wellen 5 jeweils in der Einfuhrrichtung 10 in den Lagerrahmen 3 eingebracht worden, wobei dieser sich entlang der Bewegungsachsen 9, die hier jeweils senkrecht aufeinander und senkrecht auf der Einfuhrrichtung 10 stehen, bewegen kann. Für die Beweglichkeit dienen hier die an den Ecken des Lagerrahmens 3 angebrachten Halteelemente 20, in denen Federelemente eingebracht sind. Diese Federelemente erlauben eine gewisse Beweglichkeit, die jedoch mit größerer Amplitude immer weiter abgeschwächt wird. Hier zeichnerisch rechts befinden sich die Zahnräder als Funktionselemente 12 der beiden Nockenwellen 2 für den Antrieb der Nockenwellen 2 im eingebauten Zustand. Zu erkennen ist, dass sich die Zahnräder 12 außerhalb des Innenraums des Nockenwellenmoduls 1 befinden, der durch die Umrandung des Lagerrahmens 3 und hier insbesondere durch dessen Endstück 14 geschaffen wird. Auf der den Zahnrädern 12 gegenüberliegenden Seite des Endstücks 14 befindet sich jeweils ein Axiallager 13. Für die Beweglichkeit der Nockenwellen 2 dürfen weder die Axiallager 13 noch die Zahnräder 12 direkt an dem Endstück 14 anliegen.

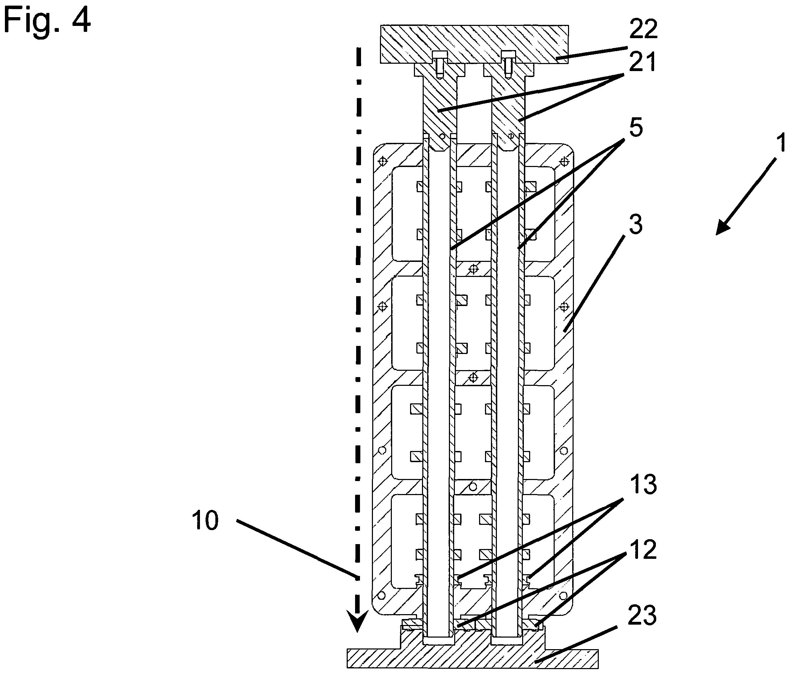

In der Fig. 4 ist ein Nockenwellenmodul 1 während der Herstellung zu sehen. Die Wellen 5 werden in die Einführrichtung 10 hier zeichnerisch nach unten in den Lagerrahmen 3 bewegt. Dafür wirken auf die Wellen 5 Stempel 21, die einzeln von einer Kraftaufbringvorrichtung 22 bewegbar sind. Auf der gegenüberliegenden Seite (hier zeichnerisch unten) befindet sich eine Anschlagfläche 23, in deren Aussparungen die Funktionselemente 12, bei denen es sich um Zahnräder handelt, aufliegen und die ausreichend Bewegungsraum für die Wellen 5 bieten. Bei der Fertigung gemäß dem vorhergehenden Verfahren werden die Wellen 5 in einer Ausgestaltung gleichzeitig bewegt. Bei den folgenden Schritten zur Befestigung der Funktionselemente 12 werden die Wellen 5 vorzugsweise nur einzeln bewegt, d. h. die Stempel 21 werden einzeln bedient.
In einem ersten Schritt wird eine Welle 5 teilweise in die Aussparung des Funktionselements 12 eingebracht. Dann wird der Abstand zwischen dem Funktionselement 12 und dem Referenzelement 13, bei dem es sich hier um ein Axiallager handelt, vermessen und mit einem Sollabstand verglichen. Ausgehend von dem Vergleichsergebnis, also insbesondere der Ermittlung der Differenz zwischen den beiden Werten wird die Welle 5 weiter bewegt, so dass sich der gewünschte Abstand einstellt und so dass sich insgesamt ein Pressverband zwischen dem Funktionselement 12, also dem Zahnrad und der Welle 5 einstellt.

## Patentansprüche

1. Verfahren zur Herstellung eines Nockenwellenmoduls (1),
wobei das Nockenwellenmodul (1) über mindestens eine Nockenwelle (2) und einen Lagerrahmen (3) mit Lagervorrichtungen (4) verfügt,
wobei die Nockenwelle (2) mindestens eine Welle (5) und Nocken (6) mit Aussparungen (7) aufweist, und
wobei die Lagervorrichtungen (4) Aussparungen (8) aufweisen,
**dadurch gekennzeichnet,**
**dass** die Welle (5) derartig erzeugt und/oder bearbeitet wird, dass die Welle (5) mindestens zwei unterschiedliche Außendurchmesser aufweist,
**dass** mindestens ein Teil der Nocken (6) und/oder der Lagervorrichtungen (4) derartig erzeugt und/oder bearbeitet wird, dass die Aussparungen der Nocken (6) und/oder die Aussparungen der Lagervorrichtungen (4) unterschiedliche Durchmesser aufweisen,
**dass** der Lagerrahmen (3) derartig gehalten wird, dass der Lagerrahmen (3) während der Herstellung des Nockenwellenmoduls (1) entlang mindestens einer Bewegungsachse (9) beweglich und entlang einer Einfuhrrichtung (10) der Welle (5) im Wesentlichen starr ist,
**dass** die Nocken (6) relativ zum Lagerrahmen (3) derartig angeordnet werden, dass die Nocken (6) zueinander ausgerichtet sind und dass die Durchmesser der Aussparungen der Nocken (6) und die Durchmesser der Aussparungen der Lagervorrichtungen (4) in Einfuhrrichtung (10) kleiner werden, und
**dass** die Welle (5) in Einfuhrrichtung (10) in den Lagerrahmen (3) derartig mindestens durch die Aussparungen (7) der Nocken (6) und die Aussparungen (8) der Lagervorrichtungen (4) eingeführt wird, dass entgegen der Einfuhrrichtung (10) der Außendurchmesser der Welle (5) zunimmt und dass sich zumindest zwischen der Welle (5) und zumindest einem Teil der Nocken (6) jeweils ein Pressverband ergibt.

2. Verfahren nach Anspruch 1,
**dadurch gekennzeichnet,**
**dass** der Lagerrahmen (3) mit mindestens einem Teil der Lagervorrichtungen (4) erzeugt wird,
und/oder
**dass** mindestens ein Teil der Lagervorrichtungen (4) relativ zum Lagerrahmen (3) angeordnet wird.

3. Verfahren nach Anspruch 1 oder 2,
**dadurch gekennzeichnet,**
**dass** das Verfahren im Wesentlichen bei Raumtemperatur durchgeführt wird, und/oder
**dass** das Einführen der Welle (5) bei im Wesentlichen gleicher Temperatur von Lagerrahmen (3) und Nockenwelle (2) durchgeführt wird,
und/oder
**dass** das Einführen der Welle (5) frei von einem Fügemittel durchgeführt wird.

4. Verfahren nach einem der Ansprüche 1 bis 3,
**dadurch gekennzeichnet,**
**dass** während des Einführens der Welle (5) die auf die Welle (5) aufgebrachte Kraft gemessen wird.

5. Verfahren nach einem der Ansprüche 1 bis 4,
**dadurch gekennzeichnet,**
**dass** die Lagervorrichtungen (4) und die Nocken (6) fertig vorbearbeitete und um die jeweiligen Aussparungen (8, 7) herum im Wesentlichen geschlossen ausgestaltete Elemente sind.

6. Verfahren zur Herstellung eines Nockenwellenmoduls (1),
wobei das Nockenwellenmodul (1) über mindestens eine Nockenwelle (2) verfügt,
und wobei die Nockenwelle (2) mindestens eine Welle (5) und Nocken (6) aufweist,
**dadurch gekennzeichnet,**
**dass** die Welle (5) teilweise in die Aussparung (11) eines Funktionselements (12) eingeführt wird,
**dass** mindestens ein Abstand zwischen dem Funktionselement (12) und einem Referenzelement (13) ermittelt wird,
**dass** der ermittelte Abstand mit einem vorgebbaren Sollabstand verglichen und ein Vergleichsergebnis erzeugt wird, und
**dass** ausgehend von dem Vergleichsergebnis eine Kraft auf die Welle (5) ausgeübt wird.

7. Verfahren nach Anspruch 6,
**dadurch gekennzeichnet,**
**dass** der Abstand ermittelt wird, während die Welle (5) und/oder das Funktionselement (12) frei von einer auf die Welle (5) bzw. das Funktionselement (12) ausgeübten Kraft sind/ist.

8. Verfahren nach Anspruch 6 oder 7,
**dadurch gekennzeichnet,**
**dass** die Welle (5) derartig teilweise in die Aussparung (11) des Funktionselements (12) eingeführt wird, dass der Abstand zwischen dem Funktionselement (12) und dem Referenzelement (13) größer als der vorgebbare Sollabstand ist.

9. Verfahren nach einem der Ansprüche 6 bis 8,
**dadurch gekennzeichnet,**
**dass** es sich bei dem Funktionselement (12) um ein Zahnrad und bei dem Referenzelement (13) um ein Axiallager handelt.

## Claims

1. A method for producing a camshaft module (1),
the camshaft module (1) having at least one camshaft (2)
and a bearing frame (3) with bearing devices (4),
the camshaft (2) having at least one shaft (5) and cams (6) with recesses (7),
and
the bearing devices (4) having recesses (8),
**characterized by the fact that**
the shaft (5) being produced and/or machined such that the shaft (5) has at least two different outside diameters, that at least part of the cams (6) and/or the bearing devices (4) are produced and/or machined such that the recesses of the cams (6) and/or the recesses of the bearing devices (4)
have different diameters,
that the bearing frame (3) is held such that the bearing frame (3) is movable during manufacturing of the camshaft module (1) along at least one of the movement axes (9) and along one insertion direction (10) of the shaft (5) that is mainly rigid, that the cams (6) are arranged relative to the bearing frame (3) such that the cams (6) are aligned to each other and that the diameter of the recesses of the cams (6) and the diameter of the recesses of the bearing devices (4) become smaller in the insertion direction (10), and
that the shaft (5) is inserted into the bearing frame (3) in the insertion direction (10) at least through the recesses (7) of the cams (6) and the recesses (8) of the bearing devices (4) such that the outside diameter of the shaft (5) increases opposite the insertion direction (10) and
that an interface fit results in each case at least between the shaft (5) and at least part of the cams (6).

2. Method according to Claim 1,
**characterized by the fact that,**
the bearing frame (3) is produced with at least part of the bearing devices (4),
and/or
at least part of the bearing devices (4) is arranged relative to the bearing frame (3).

3. Method according to Claim 1 or 2,
**characterized by the fact that**
the method is mainly carried out at room temperature,
and/or
the insertion of the shaft (5) is carried out with the bearing
frame (3) and camshaft (2) at mainly the same temperature,
and/or
the insertion of the shaft (5) is carried out without a joining agent.

4. Method according to one of the Claims 1 to 3,
**characterized by the fact that**
during the insertion of the shaft (5), the force applied to the shaft (5) is measured.

5. Method according to one of the Claims 1 to 4,
**characterized by the fact that,**
the bearing devices (4) and the cams (6) are completely
rough-machined and are mainly closed elements around
the respective recesses (8, 7).

6. A method for producing a camshaft module (1),
wherein the camshaft module (1) has at least one camshaft (2),
and wherein the camshaft (2) must have at least one shaft (5) and cam (6),
**characterized by the fact that**
the shaft (5) is partially inserted into the recess (11) of a functional element (12), at least one distance is determined between the functional element (12) and a reference element (13),
the determined distance is compared with a predefined target distance and a comparison result is generated, and
a force is exerted on the shaft (5) based on the result of the comparison.

7. Method according to Claim 6,
**characterized by the fact that**
the distance is determined while the shaft (5) and/or the functional element (12) are/is free of a force exerted on the shaft (5) or the functional element (12).

8. Method according to Claim 6 or 7,
**characterized by the fact that**
the shaft (5) is partially inserted into the recess (11) of the functional element (12) such that the distance between the functional element (12) and the reference element (13) is greater than the predefined target distance.

9. Method according to one of the Claims 6 to 8,
**characterized by the fact that,**
the functional element (12) is a gearwheel and the reference element (13) is an axial bearing.

## Revendications

1. Procédé de fabrication d'un module d'arbre à cames (1), le module
d'arbre à cames (1) comportant au moins un arbre à cames (2)
et un cadre support (3) avec des dispositifs supports (4),
l'arbre à cames (2) présentant au moins un arbre (5) et des cames (6) avec des évidements (7), et
les dispositifs supports (4) présentant des évidements (8),
**caractérisé en ce que**
l'arbre (5) est produit et/ou usiné de sorte que l'arbre (5) présente au moins deux diamètres extérieurs différents, qu'une partie au moins des cames (6) et/ou des dispositifs supports (4) est produite et/ou usinée de sorte que les évidements des cames (6) et/ou les évidements des dispositifs supports (4)
présentent des diamètres différents,
que le cadre support (3) est maintenu de sorte que, pendant la fabrication du module d'arbre à cames (1), le cadre support (3) soit mobile le long d'au moins un axe de mouvement (9) et qu'il soit essentiellement fixe le long d'un sens d'introduction (10) de l'arbre (5),
que les cames (6) sont placées par rapport au cadre support (3) de sorte que les cames (6) soient orientées l'une par rapport à l'autre et que les
diamètres des évidements des cames (6) et les diamètres des évidements des dispositifs supports (4) diminuent dans le sens d'introduction (10), et
que l'arbre (5) s'introduit dans le cadre support (3), dans le sens d'introduction (10), au moins par les évidements (7) des cames (6) et les évidements (8) des dispositifs supports (4), de sorte que, dans le sens contraire de l'introduction (10), le diamètre extérieur de l'arbre (5) diminue, et
qu'il en résulte un frettage au moins entre l'arbre (5) et au moins une partie des cames (6).

2. Procédé selon revendication 1,
**caractérisé en ce que**
le cadre support (3) est produit avec au moins une partie des dispositifs supports (4), et/ou
qu'au moins une partie des dispositifs supports (4) est placée par rapport au cadre support (3).

3. Procédé selon revendication 1 ou 2,
**caractérisé en ce que**
le procédé est mis en oeuvre essentiellement à la température ambiante,
et/ou
que l'introduction de l'arbre (5) s'effectue à température essentiellement identique du cadre support (3) et de l'arbre à cames (2),
et/ou
que l'introduction de l'arbre (5) s'effectue sans agent d'assemblage.

4. Procédé selon l'une des revendications 1 à 3,
**caractérisé en ce que**
la force appliquée sur l'arbre (5) est mesurée pendant l'introduction de l'arbre (5).

5. Procédé selon l'une des revendications 1 à 4,
**caractérisé en ce que**
les dispositifs supports (4) et les cames (6) sont des éléments entièrement pré-usinés et conçus essentiellement fermés autour des différents évidements (8, 7).

6. Procédé de fabrication d'un module d'arbre à cames (1),
le module d'arbre à cames (1) comportant au moins un arbre à cames (2),
et l'arbre à cames (2) présentant au moins un arbre (5) et des cames (6), **caractérisé en ce que**
l'arbre (5) s'introduit en partie dans l'évidement (11) d'un élément fonctionnel (12), qu'au moins un écartement est déterminé entre l'élément fonctionnel (12) et un élément de référence (13),
que l'écartement déterminé est comparé à un écartement théorique pouvant être prédéfini et qu'un résultat comparatif est généré, et
qu'une force s'exerce sur l'arbre (5), en partant du résultat comparatif.

7. Procédé selon revendication 6,
**caractérisé en ce que**
l'écartement est déterminé, tandis que l'arbre (5) et/ou l'élément fonctionnel (12) est/sont exempt(s) d'une force exercée sur vo l'arbre (5) ou sur l'élément fonctionnel (12).

8. Procédé selon revendication 6 ou 7,
**caractérisé en ce que**
l'arbre (5) s'introduit en partie dans l'évidement (11) de l'élément fonctionnel (12) de sorte que l'écartement entre l'élément fonctionnel (12)
et l'élément de référence (13) soit plus grand que l'écartement théorique pouvant être prédéfini.

9. Procédé selon l'une des revendications 6 à 8,
**caractérisé en ce que**
l'élément fonctionnel (12) est un engrenage et l'élément de référence (13) un roulement axial.
